# FASCICULE DE BREVET EUROPEEN

(11) **EP 0 321 342 B1**
(45) Date de publication et mention de la délivrance du brevet: **02.03.1994**
(21) Numéro de dépôt: 88403186.5
(22) Date de dépôt: 14.12.1988
(51) Int. Cl.: G02B 27/64, G01C 19/00

(54) **Dispositif inertiel de stabilisation en inclinaison d'un élément orientable et miroir de télescope embarqué muni d'un tel dispositif**
Stabilisierendes Trägheitssystem für den Neigungswinkel von orientierbaren Bauteilen und mit diesem System verbundener Teleskopspiegel
Inertial stabilizing device for the inclination of orientable elements and telescope mirror mounted on this device

(30) Priorité: 17.12.1987 FR 8717642
(43) Date de publication de la demande: 21.06.1989
(73) Titulaire: AEROSPATIALE Société Nationale Industrielle, 75781 Paris Cédex 16 (FR)
(72) Inventeur: Malige, Jean, F-06250 Mougins (FR)
(74) Mandataire: Rinuy, Santarelli

(56) Documents cités:
- CH-A- 475 569
- DE-A- 1 548 371
- DE-A- 2 607 679
- DE-B- 1 547 241
- FR-A- 2 560 677

## Description

L'invention concerne un dispositif de stabilisation en inclinaison, par rapport à un repère extérieur, d'un corps mobile en rotation autour d'au moins un axe de rotation par rapport à un support sujet à des fluctuations d'inclinaison par rapport audit repère extérieur. Elle a trait plus particulièrement, mais non exclusivement, à la stabilisation d'un élément d'optique embarqué sur un véhicule, par exemple un avion (ou encore un ballon, un véhicule spatial...) par rapport auquel cet instrument d'optique admet deux axes de rotation perpendiculaires.

Il s'agit par exemple du miroir d'entrée d'un télescope d'observation embarqué sur un avion. Ainsi qu'on le sait ce miroir a pour fonction de réfléchir un rayonnement incident selon l'axe d'entrée du télescope, lequel axe est fixe par rapport à l'avion (le plus souvent l'axe du télescope est parallèle à l'axe longitudinal, et à la trajectoire de l'avion, tandis que le rayonnement incident est approximativement transversal). Ce miroir est orientable selon deux axes orthogonaux, respectivement perpendiculaire et parallèle à l'axe du télescope. Il s'agit alors d'asservir avec un maximum de précision en inclinaison le miroir par rapport à l'avion en sorte de maintenir l'alignement de son rayonnement réfléchi avec l'axe du télescope, malgré les vibrations de l'avion et ses variations d'orientation dans l'espace.

Plusieurs dispositifs de stabilisation selon 1 ou 2 axes ont déjà été proposés pour répondre autant que possible à cet objectif ; certains d'entre eux sont par exemple décrits dans les documents CH-475.569, FR-2.552.893, FR-2.560.677, US-3.378.326, US-3.493.283, US-4.155.621 ou US-4.576.449. De manière plus générale on connaît également un dispositif de stabilisation d'une plate-forme inertielle de par le document US-3.499.332 ou le document SU-783.587. Tous ces systèmes font intervenir des gyroscopes ou des roues d'inertie.

Une difficulté particulière est à résoudre dans un tel asservissement selon deux axes puisque les variations en inclinaison de l'avion, par rapport à un axe transversal perpendiculaire à l'axe d'entrée du télescope, demandent une correction d'angle du miroir dans un rapport 1/2 tandis que, en cas de variation en inclinaison par rapport à l'axe longitudinal la correction d'angle doit se faire dans un rapport 1/1.

D'autre part, l'observation de cibles mobiles impose souvent de pouvoir pointer à grande vitesse un tel miroir d'entrée.

Des problèmes de même nature sont liés à l'utilisation d'autres instruments optiques tels que, par exemple, le réflecteur orientable d'un générateur/laser embarqué sur un véhicule, le plus souvent aérien ou spatial.

Les dispositifs de stabilisation connus à ce jour ne permettent pas, en matérialisant une référence inertielle, une stabilisation de grande précision (une minute d'arc angulaire, voire moins) tout en autorisant un pointage à grande vitesse (par exemple jusqu'à 200°/s).

Ainsi notamment les dispositifs à plate-forme stabilisée ne conviennent pas en pratique à la correction d'angle selon le rapport 1/2 précité.

Quant aux dispositifs comportant des gyroscopes liés à l'instrument à stabiliser, ils ne permettent pas de grandes vitesses de pointage car il faut pour cela provoquer une précession importante de leurs gyroscopes, ce qui nuit à la précision. Comme en ce qui concerne un pointage autour d'un axe transversal, il faut que la précession soit dans un rapport 1/2 avec l'angle de pointage, il en découle une erreur supplémentaire.

Il est rappelé ici que la précession est un mouvement résultant d'un couple extérieur qui est perpendiculaire au plan défini par l'axe toupie et l'axe du couple perturbateur.

En général, les solutions connues concernent des viseurs de petites dimensions sans asservissement.

L'invention a pour objet un dispositif satisfaisant simultanément aux objectifs ci-dessus, pour au moins un axe de pivotement, admettant une grande vitesse de pointage sans précession rapide du ou des gyroscope(s) qu'il contient.

Elle propose ainsi un dispositif de stabilisation selon la revendication 1, dont le préambule est basé sur CH-475.569.

Selon des dispositions préférées de l'invention:
- l'arbre d'entrée est approximativement parallèle à l'axe d'inclinaison. En pratique l'écart entre l'arbre d'entrée et l'axe d'inclinaison est inférieur à 15° ;
- l' axe de toupie est sensiblement perpendiculaire à l'axe d'inclinaison. En pratique l'axe de toupie fait un angle compris entre 85° et 95° avec l'axe d'inclinaison;
- le carter du moteur de pointage est solidaire de l'élément orientable, le rapport de transmission valant K = 1;
- la liaison de transmission est constituée d'une paire de roues dentées, engrenant l'une sur l'autre et présentant des nombres de dents égaux, respectivement portées par le support et l'arbre d'entrée, le rapport de transmission résultant étant K = 1/2.

L'originalité de cette invention est que le gyroscope est utilisé comme instrument de zéro dans une boucle d'asservissement permettant une vitesse de rotation importante pour orienter l'instrument optique. Cette vitesse peut être de plusieurs centaines de degrés par secondes.

Ce résultat est obtenu sans précession du gyroscope.

Le fait d'utiliser le gyroscope comme instrument de zéro permet de minimiser un certain nombre d'erreurs, ou de dérives. Par exemple le gyroscope conserve la même position relative par rapport à la gravité et n'est donc pas perturbé, comme dans le cas d'un gyroscope lié.

Indépendamment, il est donc possible de faire précessionner le gyroscope, à très faible vitesse pour effectuer des corrections angulaires, notamment dans l'un ou l'autre des cas suivants :
- recaler la référence avant la mission, ou pendant celle-ci si on dispose d'une référence externe ;
- annuler la rotation terrestre (les composantes de la rotation terrestre varient suivant la direction et la latitude de 0 à 15°/heure) ;
- suivre la verticale locale (une vitesse de 1,852 km/h (1 noeud) correspond à une rotation de 1 minute d'arc/heure.

L'invention propose également un dispositif de stabilisation d'un instrument optique orientable autour de deux axes de rotation orthogonaux, comportant deux dispositifs élémentaires du type précité, l'un d'entre eux étant lié directement à cet instrument optique (pour les fluctuations du support autour d'un axe parallèle à l'axe de l'équipement embarqué associé), l'autre étant lié à cet instrument par une liaison (par exemple un système d'engrenage épicycloïdal) qui réalise un rapport 1/2.

L'invention propose aussi un miroir de télescope embarqué équipé d'un tel dispositif de stabilisation.

Des objets, caractéristiques et avantages de l'invention ressortent de la description qui suit, donnée à titre d'exemple illustratif non limitatif, en regard des dessins annexés sur lesquels :
- la figure 1 est un schéma en perspective d'un dispositif de stabilisation à un axe conforme à l'invention ;
- la figure 2 en est une représentation simplifiée limitée aux axes de rotation qui y interviennent ;
- la figure 3 est un schéma en perspective d'un module gyroscopique, isolé ;
- la figure 4 est une vue en élévation, à l'opposé du rayonnement incident, d'un miroir embarqué à deux axes, équipé d'un dispositif de stabilisation à deux axes conforme à l'invention ;
- la figure 5 en est une de dessus ;
- la figure 6 est un schéma en perspective d'un module gyroscopique monté rotatif, autour de son axe d'entrée sur un élément orientable ;
- la figure 7 est une vue schématique partielle du dispositif de la figure 4, détaillant une première boucle d'asservissement ;
- la figure 8 est une vue schématique analogue détaillant une seconde boucle d'asservissement, complémentaire de celle de la figure 7 ; et
- la figure 9 est une schéma électrique partiel associé au dispositif de la figure 4, ne faisant apparaître explicitement que l'une des boucles d'asservissement.

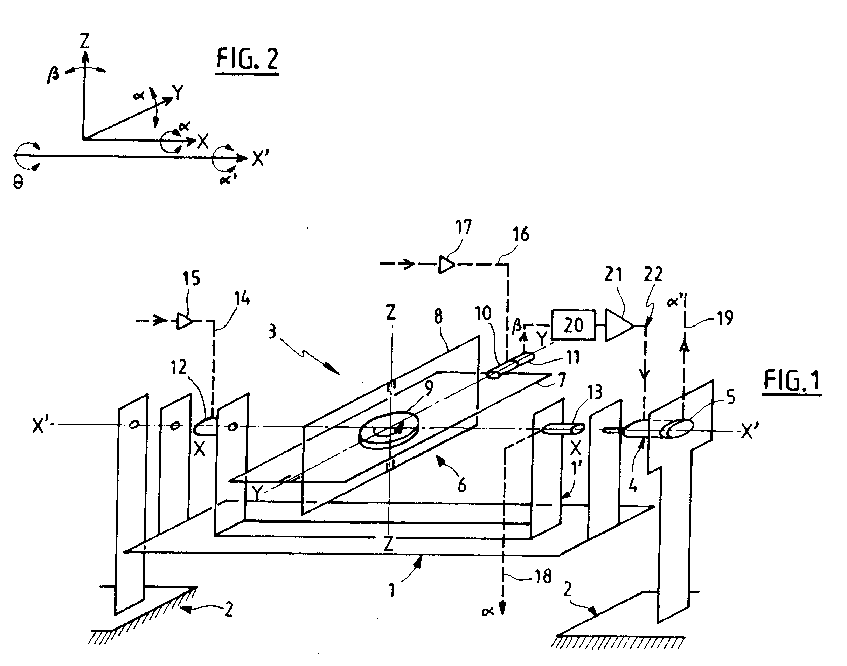

La figure 1 représente de façon schématique un élément orientable 1, mobile en rotation autour d'un axe d'inclinaison X′-X′ par rapport à un support 2, lui-même susceptible de présenter des fluctuations d'orientation, autour de cet axe X′-X′, par rapport à un référentiel externe, ainsi qu'un dispositif 3 de stabilisation de l'élément orientable 1 par rapport à son support 2.

Un moteur d'inclinaison 4 est associé à l'élément orientable 1 pour sa commande en inclinaison par rapport au support 2, autour de l'axe X′-X′. Un codeur 5 est associé à ce moteur pour relever, si nécessaire, la position angulaire instantanée α′ de l'élément orientable 1 par rapport au support 2.

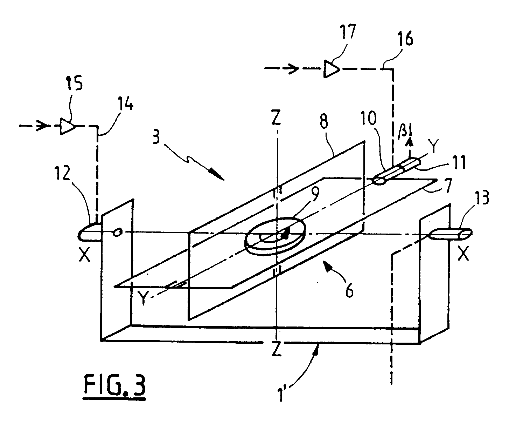

Le dispositif de stabilisation 3 aussi appelé ci-après "module gyroscopique" est représenté isolé à la figure 3 : il comporte principalement un gyroscope 6 comportant un boîtier 7 ici schématisé par un cadre extérieur, un cadre intérieur 8, une toupie 9, un moteur couple 10 et un détecteur 11.

Le boîtier ou cadre extérieur 7 est lié à un berceau 1′ solidaire de l'élément orientable 1 par un arbre d'entrée matérialisant un axe X-X, appelé axe sensible du dispositif 3.

Le cadre intérieur 8 est monté pivotant sur le cadre extérieur 7 autour d'un axe Y-Y, perpendiculaire à l'axe X-X et appelé axe de sortie ou axe de précession. Le mouvement en pivotement du cadre intérieur 8 par rapport au cadre extérieur 7 est commandé par le moteur-couple 10 ; le détecteur 11 relève la position relative instantanée β entre les cadres 7 et 8.

La toupie 9 est entraînée en rotation, à grande vitesse, par des moyens classiques non représentés autour d'un axe Z-Z, perpendiculaire à l'axe de sortie Y-Y et appelé axe de toupie, matérialisé par un arbre engagé dans des paliers liés au cadre intérieur. Cet axe tend à constituer un axe inertiel de référence.

Dans la configuration de la figure 1, l'axe de toupie Z-Z est en moyenne sensiblement perpendiculaire à l'axe sensible X-X, lequel est confondu avec l'axe X′-X′.

Les axes X-X et X′-X′ peuvent, en variante, être parallèles non confondus. Ils peuvent même ne pas être parallèles, sous réserve que leur angle soit inférieur à 90° (de préférence inférieur à 45° voire, mieux, inférieur à 15°) et que l'axe d'inclinaison ne soit pas parallèle à l'axe de toupie (en faisant avec celui-ci un angle de préférence compris entre 85 et 95° environ).

Au sein du module gyroscopique 3, le cadre extérieur 7, et donc le gyroscope 6 pris dans son ensemble, est commandé en pivotement par rapport à l'élément orientable 1, autour de l'axe X-X par un moteur 12, appelé moteur de pointage, auquel est associé un codeur angulaire 13 adapté à relever la position angulaire instantanée α du gyroscope 6 par rapport à l'élément orientable 1. Ce moteur de pointage 12 a un carter qui est ici solidaire du berceau 1′ de l'élément orientable 1.

A titre de rappel, ainsi qu'on le sait, tout couple appliqué au cadre extérieur 7 autour de l'axe sensible X-X par rapport à un repère fixe dans l'espace induit, conformément au théorème du moment cinétique, une inclinaison (précession) de l'axe de toupie Z-Z autour de l'axe de sortie Y-Y aussi appelé axe de précession. Cette précession peut aussi être provoquée directement par le moteur-couple 10.

Le module gyroscopique 3 comporte en outre des lignes de connection avec des éléments extérieurs.

Ainsi le moteur de pointage 12 reçoit des signaux de consigne par une ligne 14, équipée en pratique d'un amplificateur 15. De même le moteur-couple 10 reçoit des signaux d'alignement par une ligne 16, également équipée d'un amplificateur 17. Le codeur angulaire 13 transmet la grandeur α par une ligne 18.

Le codeur 5 transmet de même l'angle α′ par une ligne 19.

Quant au détecteur 11, il transmet la grandeur β à un circuit 20 de traitement et de filtrage qui génère un signal d'asservissement qui, après amplification en 21, est appliqué au moteur 4. Cela constitue une boucle 22 d'asservissement de l'élément orientable 1 par rapport au support 2.

Le module gyroscopique 3 complété par les lignes précitées permet d'asservir l'élément orientable avec diverses possibilités.

En régime d'asservissement, si le support présente une variation ϑ d'orientation dans l'espace autour d'un axe parallèle à X′-X′, cette variation se transmet d'abord à l'élément orientable 1, ce qui induit par le berceau 1′ un couple autour de l'axe d'entrée X-X du module gyroscopique 3. Il en découle une précession β du gyroscope, laquelle est détectée par le détecteur 11. Le circuit 20 de la boucle d'asservissement 22 génère en conséquence un signal pour le moteur 4, qui provoque une rotation α′ de l'élément orientable par rapport au support, égale mais opposée à la perturbation ϑ. Il en découle un couple de redressement sur le gyroscope qui subit une précession qui ramène l'axe Z-Z en son orientation d'origine par rapport à l'espace.

Lorsque l'axe d'inclinaison X′-X′ fait un angle non nul avec l'arbre d'entrée, toute perturbation angulaire autour de l'axe d'inclinaison se décompose en une composante de rotation parallèle à l'axe de toupie, qui n'induit aucune réaction du module gyroscopique, et en une composante de rotation autour de l'arbre d'entrée, qui fait l'objet d'une compensation de précession comme indiqué ci-dessus.

Par ailleurs, lorsque, avant le début d'une phase de travail, on veut ajuster la position de l'axe de toupie dans l'espace, on active le moteur-couple 10 en conséquence.

Enfin, si l'on veut déplacer rapidement l'élément orientable 1 par rapport à son support 2, on applique un signal de consigne au moteur de pointage 12. Dès que celui-ci commence à appliquer un couple au gyroscope 6, comme précédemment la boucle d'asservissement 22 provoque une rotation relative élément orientable/support qui tend à compenser la précession induite de la toupie 9. Il en résulte que l'élément orientable 1 change d'inclinaison par rapport au support sans induire de précession du gyroscope : ce changement d'inclinaison peut donc se faire à grande vitesse et avec une grande précision.

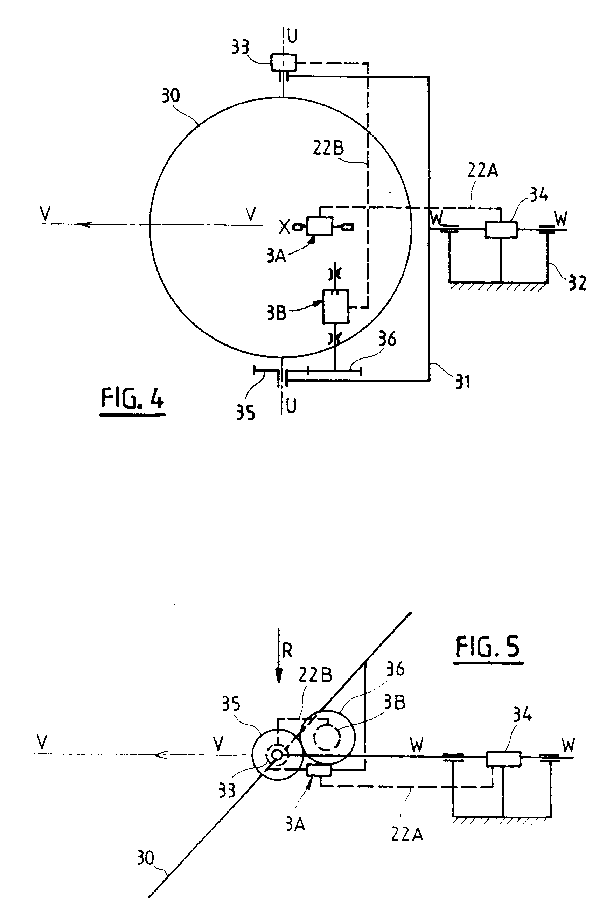

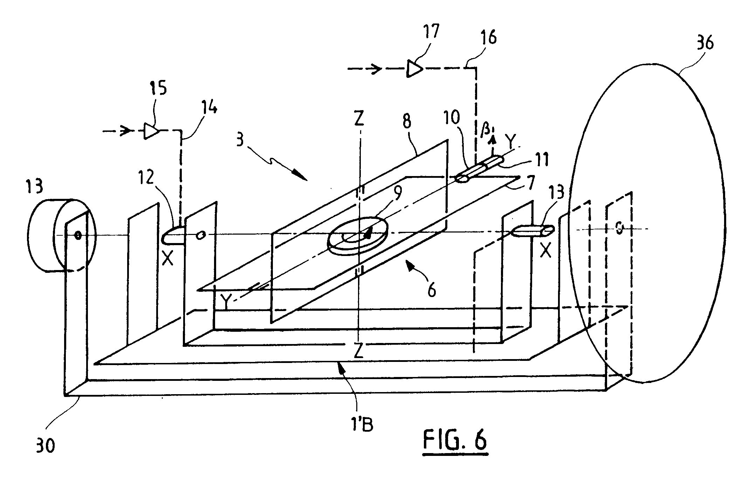

Les figures 4 à 9 illustrent un exemple d'application particulièrement avantageux du module gyroscopique 3 de la figure 1. Il s'agit de la stabilisation selon deux axes du miroir d'entrée 30 d'un télescope embarqué (en pratique dans le nez d'un avion), uniquement représenté par son axe d'entrée V-V. Cet axe d'entrée est en pratique parallèle à l'axe longitudinal ou axe de poussée de l'avion sur lequel il est embarqué.

Ce miroir 30 est articulé autour d'un axe U-U transversal à V-V sur une fourche 31 elle-même articulée autour d'un axe W-W parallèle à l'axe V-V (en pratique confondu avec ce dernier) sur une structure porteuse 32 solidaire de l'avion.

Ce miroir est en moyenne orienté à 45° par rapport aux axes V-V et W-W en sorte de pouvoir réfléchir selon l'axe V-V un rayonnement incident R transversal à l'axe de l'avion. Il est elliptique en sorte de présenter une surface en disque à ce rayonnement. Il présente en pratique un débattement angulaire de 10° environ de part et d'autre de cette valeur moyenne de 45° (sous le contrôle d'un moteur 33) et un débattement angulaire d'au moins 90°, voire plus de 180°, autour de l'axe W-W (sous le contrôle d'un moteur 34).

Ainsi qu'il ressort des figures 4 et 5 à chaque axe U-U et W-W est associé un module gyroscopique du type décrit ci-dessus. L'un d'entre eux, noté 3A, est associé à l'axe W-W, et l'autre, noté 3B, est associé à l'axe U-U. Ces modules gyroscopiques constituent conjointement un dispositif de stabilisation du miroir 30 par rapport à un repère extérieur.

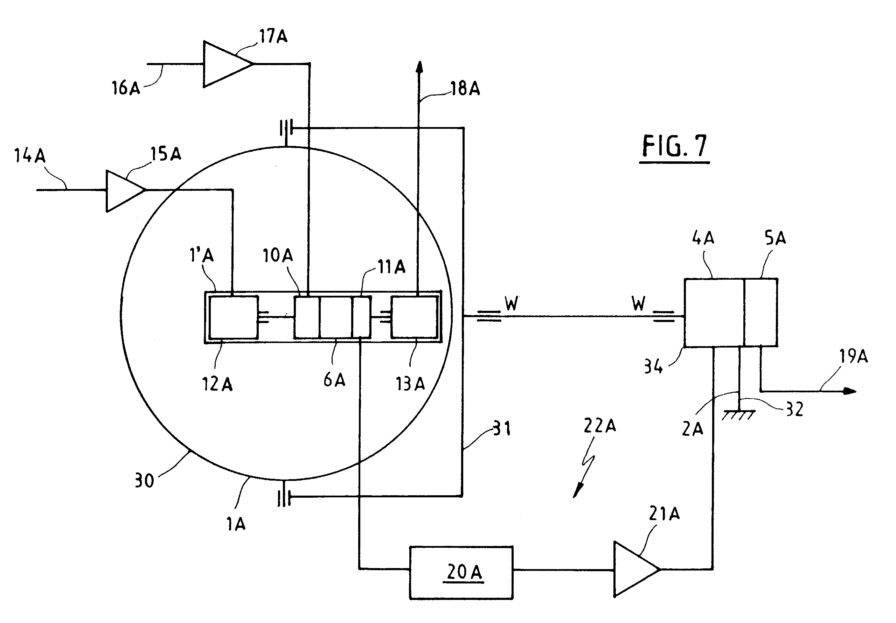

Le module gyroscopique 3A est directement porté par le miroir 30, c'est-à-dire que son berceau 1'A (voir figure 7) est solidaire du miroir lui-même. L'axe d'entrée de son gyroscope 6A est sensiblement parallèle à l'axe W-W (au débattement angulaire près du miroir par rapport à la fourche (10° en pratique) ).

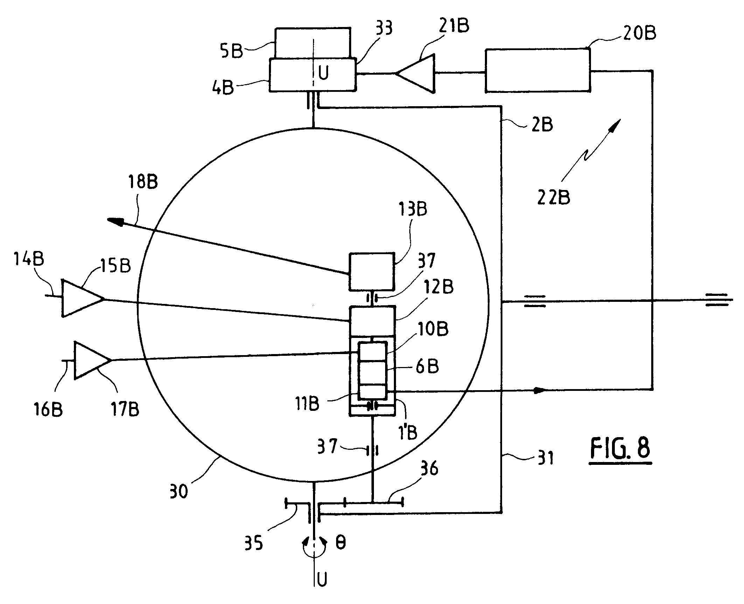

Le dispositif de stabilisation 3B est par contre indirectement porté par le miroir tandis que son axe d'entrée est parallèle à U-U. Son berceau 1′B (voir figure 8) est en fait relié au miroir par une liaison mécanique telle que ce berceau tourne deux fois plus vite autour d'un axe parallèle à U-U que le miroir lui-même.

Dans l'exemple représenté (figures 4 à 6 et 8) cette liaison est assurée par une paire de roues dentées 35 et 36 présentant le même nombre de dents. L'une 35 de ces roues dentées, est solidaire d'une branche de la fourche 31 et coaxiale à U-U, tandis que l'autre 36 est solidaire du berceau 1′B (ici un boîtier) monté rotatif par des paliers 37, sur le miroir.

Ces modules gyroscopiques 3A et 3B sont disposés aussi près que possible du centre de gravité du miroir.

Chacun de ces modules gyroscopiques est connecté au moteur 33 ou 34 correspondant selon des lignes formant des boucles d'asservissement 22A ou 22B dont le détail apparaît aux figures 7 et 8.

Pour faire ressortir l'analogie entre ces figures et la figure 1, les éléments de ces figures correspondant à ceux de la figure 11 ont la même référence suivie de la lettre A ou B respectivement, quitte à ce que certains éléments aient une double référence.

La liaison entre les supports 2A et 2B et les berceaux associés 1′A et 1′B n'est toutefois pas aussi directe qu'à la figure 1, mais le principe en est le même.

Ainsi à la figure 8 en ce qui concerne la deuxième boucle d'asservissement 22B et le module gyroscopique 3B, on constate que, en cas d'un perturbation angulaire ϑ de l'avion, donc de la fourche 31 mais aussi du télescope lui-même, autour d'un axe parallèle à l'axe U-U, cette perturbation se retrouve au niveau du gyroscope 6B. Il en découle, au travers de la boucle d'asservissement 22B, une rotation compensatrice du miroir par rapport à la fourche 31 qui est égale à la moitié de la perturbation ϑ, ce qui réaligne le rayonnement réfléchi selon l'axe du télescope tout en compensant complètement la précession résultant de la perturbation.

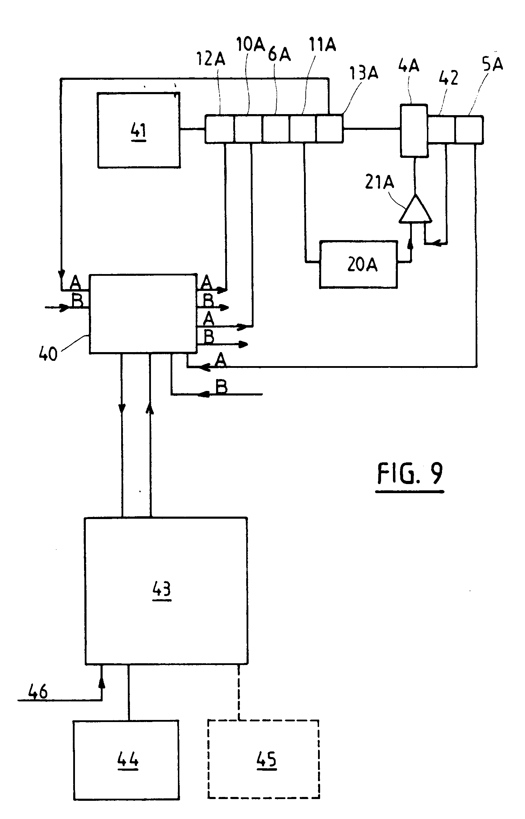

La figure 9 est un schéma d'ensemble du circuit de commande des dispositifs de stabilisation, sur lequel seule la voie A est représentée (correspondant aux éléments de la figure 7), la voie B n'étant qu'esquissée pour des raisons de visibilité mais étant tout à fait similaire à la voie A.

Ce circuit comporte un organe 40 de commande, de prépointage et de poursuite, en pratique constitué d'un microprocesseur, qui transmet aux modules gyroscopiques 3A et 3B les ordres nécessaires à la bonne orientation du miroir par rapport à l'axe du télescope 41 et en reçoit en retour les signaux de mesure. On peut noter la présence d'un tachymètre 42 dont le signal de vitesse est utilisé en 21A pour stabiliser la boucle d'asservissement.

Cet organe de commande 40 est lui-même contrôlé par un calculateur 43 de navigation et de commande du télescope. Ce calculateur reçoit diverses informations, notamment d'une centrale inertielle de navigation 44 (CIN), voire le cas échéant d'un récepteur 45 de type NAVSTAR (système de localisation par satellite). Il reçoit également des informations extérieures 46.

Un tel système global 3A-3B de stabilisation du miroir offre les avantages et particularités suivantes :
- l'élément asservi (le miroir) porte lui-même l'élément sensible aux mouvements de l'avion (le module gyroscopique) qui sert de détecteur d'erreur pour une boucle analogique de puissance (cet élément sensible étant fixé directement ou indirectement par l'élément asservi). Les mouvements de l'avion ne sont donc pas pris en compte par le microprocesseur qui peut, de ce fait, avoir une fréquence de calcul beaucoup plus faible. Les caractéristiques de la boucle analogique ainsi constituée dépendent de la réponse de l'avion aux sollicitations extérieures,
- le système n'est pas perturbé par les déformations éventuelles de l'avion,
- le système permet des déplacements angulaires de grande amplitude et de grande vitesse (environ 200°/Sec),
- les gyroscopes matérialisent la référence inertielle,
- possibilité de recalage fin de la référence inertielle en fonction de la postion de l'avion, même pendant le pointage,
- l'utilisation d'un microprocesseur permet la mise en oeuvre et la surveillance du système, avec un interface purement numérique avec le calculateur de navigation,
- la redondance des mesures d'angle donne une grande sûreté de fonctionnement et permet de déceler rapidement les anomalies de fonctionnement,
- le système est indépendant du pilotage de l'avion, ce qui augmente la sûreté de la mission,
- l'intégration du système peut être très poussée avant l'interconnexion avec le calculateur de la mission,
- cette solution fait appel à des solutions classiques ne présentant pratiquement pas d'aléas,
- les modules gyroscopiques constituent un tout pouvant être confié à un seul sous-traitant,
- sur les modules la référence inertielle est matérialisée ; il est donc possible, par exemple, d'utiliser en contrôle une référence d'horizon,
- les éléments de réglage du système sont localisés très précisément d'une part dans les filtres de structure et les gains de l'électronique de la boucle de puissance et d'autre part dans le logiciel du microprocesseur. Une part très importante de la définition du système sera acquise très rapidement et ne sera pas susceptible de varier après les essais.

Il va de soi que la description qui précède n'a été proposée qu'à titre d'exemple non limitatif et que de nombreuses variantes peuvent être proposées par l'homme de l'art sans sortir du cadre de l'invention. Ainsi notamment les dentures des roues dentées 35 et 36 peuvent être remplacées par tout autre moyen propre à permettre à ces roues, de diamètres égaux, de rouler sans glisser l'une sur l'autre ; en variante non représentée il s'agit d'une courroie enroulée en forme de huit sur la tranche de ces deux roues.

## Revendications

1. Dispositif de stabilisation en inclinaison, par rapport à un repère extérieur, d'un élément orientable (1, 30) mobile en rotation, selon au moins un premier axe d'inclinaison (X'-X', U-U, W-W) sous le contrôle d'un premier moteur d'inclinaison spécifique à cet axe (4, 33, 34) par rapport à un support (2, 31, 32) lui-même mobile par rapport à ce repère extérieur, ce dispositif comportant un premier module gyroscopique (3, 3B, 3A) ayant un premier arbre d'entrée (X-X) et un axe de toupie (Z-Z), perpendiculaire à un axe de précession (Y-Y) lui-même perpendiculaire à l'arbre d'entrée, qui fait un angle non nul avec cet axe d'inclinaison, cet arbre d'entrée étant maintenu axialement et latéralement vis-à-vis de l'élément orientable (1, 30) et étant commandé en rotation sur lui-même par un premier moteur de pointage (12, 12B, 12A) recevant des signaux de pointage, dont le carter est solidaire d'un premier berceau (1', 1'B, 1'A), ledit premier module gyroscopique comportant en outre un premier détecteur de précession (11, 11B, 11A) connecté au moteur d'inclinaison (4, 33, 34) au travers d'un premier circuit d'asservissement (20, 20B, 20A) adapté à appliquer à tout instant au moteur d'inclinaison (4, 33, 34) un signal de commande destiné à compenser une précession instantanée détectée par ledit détecteur,
ce dispositif étant caractérise en ce que ce premier module gyroscopique est spécifique audit axe d'inclinaison et est porté au moins indirectement par l'élément orientable, en ce que le berceau de ce module spécifique est lui-même commandé en rotation par rapport au support (2, 31, 32), parallèlement à l'axe d'entrée, selon une liaison de transmission (1'-1, 35-36, 1'A-30) déterminant un rapport K constant entre les rotations respectives de l'élément orientable (1, 30) et du berceau par rapport audit support, en ce que le moteur de pointage de ce module spécifique est distinct du moteur d'inclinaison spécifique audit axe d'inclinaison, et en ce que ledit premier arbre d'entrée fait un angle inférieur à 90° par rapport audit axe d'inclinaison.

2. Dispositif de stabilisation selon la revendication 1, caractérisé en ce que le premier module gyroscopique (3, 3A, 3B) est en outre muni selon l'axe de précession d'un moteur-couple (10, 10A, 10B) recevant des signaux d'alignement.

3. Dispositif de stabilisation selon la revendication 1 ou la revendication 2, caractérisé en ce que l'arbre d'entrée (X-X) est approximativement parallèle à l'axe d'inclinaison (X'-X', U-U, W-W), avec un écart inférieur à 15°.

4. Dispositif de stabilisation selon l une quelconque des revendications 1 à 3, caractérisé en ce que l'axe de toupie (Z-Z) est sensiblement perpendiculaire à l'axe d'inclinaison (X'-X', U-U, W-W).

5. Dispositif de stabilisation selon l'une quelconque des revendications 1 à 4, caractérisé en ce que, au moteur de pointage (12, 12A, 12B), est associé un codeur angulaire (13, 13A, 13B).

6. Dispositif de stabilisation selon l'une quelconque des revendications 1 à 5, caractérisé en ce que le carter du moteur de pointage (12, 12A) est solidaire de l'élément orientable (1, 30), le rapport de transmission valant K = 1.

7. Dispositif de stabilisation selon l une quelconque des revendications 1 à 5, destiné à la stabilisation d'un miroir orientable, caractérisé en ce que la liaison de transmission du berceau (1'B) du premier module gyroscopique (3B) au miroir (30) est constituée d'une paire de roues dentées (35, 36) engrenant l'une dans l'autre et présentant des nombres de dents égaux, respectivement portées par le support et le berceau d'entrée, le rapport de transmission résultant valant K = 1/2.

8. Dispositif de stabilisation selon l une quelconque des revendications 1 à 5, caractérisé en ce que l'élément orientable est mobile en rotation par rapport au support, sous le contrôle d'un second moteur d'inclinaison (34, 33), selon un second axe d'inclinaison (W-W, U-U) orthogonal au premier axe d'inclinaison, à ce second axe d'inclinaison étant associé un second module gyroscopique (3A, 3B), porté par l'élément orientable (30) en sorte d'avoir son arbre d'entrée orthogonal au premier arbre d'entrée et équipé d'un second moteur de pointage (12A, 12B) dont le carter est solidaire d'un second berceau (1'A, 1'B) commandé en rotation par rapport au support, parallèlement au second axe d'inclinaison, selon une seconde liaison de transmission (1'A-30, 1'B-35-36-30) déterminant un second rapport constant K différent du premier rapport constant, ce second module comportant un second détecteur de précession (11A, 11B) connecté au second moteur d'inclinaison (34, 33) au travers d'un second circuit d'asservissement (20A, 20B).

9. Dispositif de stabilisation selon la revendication 8, caractérisé en ce que, l'élément orientable étant un réflecteur (30) associé à un équipement embarqué sur le support (32) et ayant un axe (V-V) fixe par rapport à ce dernier, ce réflecteur étant monté pivotant, autour d'un axe transversal (U-U) formant le second axe d'inclinaison sous le contrôle du second moteur d'inclinaison (33), sur une fourche (31) montée pivotante sur le support, autour d'un axe (W-W) parallèle à l'axe de l'équipement et formant le premier axe d'inclinaison, sous le contrôle du premier moteur d'inclinaison (34), le premier berceau (1'A) est solidaire du réflecteur, déterminant un rapport de transmission K égal à 1 tandis que le second berceau (1'B) est solidaire d'une roue dentée (36) engrenant avec une seconde roue dentée (35) ayant un nombre égal de dents et solidaire de la fourche déterminant un rapport de transmission K égal à 1/2.

10. Dispositif de stabilisation selon la revendication 9, caractérisé en ce que l'arbre d'entrée du premier module gyroscopique est approximativement parallèle au premier axe d'inclinaison (W-W) tandis que l'arbre d'entrée du second module gyroscopique est parallèle au second axe d'inclinaison (U-U).

11. Miroir de télescope embarqué équipé d'un dispositif de stabilisation selon l'une quelconque des revendications 8 à 10.

## Claims

1. Device for stabilising the inclination, relative to an external frame of reference, of an orientable member (1, 30) movable with respect to rotation about at least one first inclination axis (X'-X', U-U, W-W) under the control of a first inclination motor specific to this axis (4, 33, 34), relative to a support (2, 31, 32) itself movable with respect to this external frame of reference, this device including a first gyroscope unit (3, 3B, 3A) having a first input shaft (X-X) and a rotor axis (Z-Z), perpendicular to a precession axis (Y-Y) itself perpendicular to the input shaft, which forms a non-zero angle to this inclination axis, this input shaft being held axially and laterally with respect to the orientable member (1, 30) and being controlled in rotation upon itself by a first aiming motor (12, 12B, 12A) receiving aiming signals, the casing of which is fixed to a first cradle (1', 1'B, 1'A), the said first gyroscope unit also including a first precession detector (11, 11B, 11A) connected to the inclination motor (4, 33, 34) through a first automatic control circuit (20, 20B, 20A) adapted to apply at any time, to the inclination motor (4, 33, 34), a control signal intended to compensate for any instantaneous precession detected by the said detector, this device being characterised in that this first gyroscope unit is specific to the said inclination axis and is carried at least indirectly by the orientable member, in that the cradle for this specific unit is itself controlled in rotation with respect to the support (2, 31, 32), parallel to the input axis, by means of a transmission linkage (1'-1, 35-36, 1'A-30) determining a constant ratio K between the respective rotations of the orientable member (1, 30) and of the cradle with respect to the said support, in that the aiming motor for this specific unit is separate from the inclination motor specific to the said inclination axis, and in that the said first input shaft forms an angle of less than 90° with respect to the said inclination axis.

2. Stabilisation device according to Claim 1, characterised in that the first gyroscope unit (3, 3A, 3B) is also provided, on the precession axis, with a torque motor (10, 10A, 10B) receiving alignment signals.

3. Stabilisation device according to Claim 1 or Claim 2, characterised in that the input shaft (X-X) is approximately parallel to the inclination axis (X'-X', U-U, W-W), with a separation of less than 15°.

4. Stabilisation device according to any one of Claims 1 to 3, characterised in that the rotor axis (Z-Z) is substantially perpendicular to the inclination axis (X'-X', U-U, W-W).

5. Stabilisation device according to any one of Claims 1 to 4, characterised in that an angular encoder (13, 13A, 13B) is associated with the aiming motor (12, 12A, 12B).

6. Stabilisation device according to any one of Claims 1 to 5, characterised in that the casing of the aiming motor (12, 12A) is fixed to the orientable member (1, 30), the transmission ratio having the value K = 1.

7. Stabilisation device according to any one of Claims 1 to 5, intended for stabilising an orientable mirror, characterised in that the transmission linkage between the cradle (1'B) of the first gyroscope unit (3B) and the mirror (30) consists of a pair of gear wheels (35, 36) meshing with each other and having the same number of teeth, carried respectively by the support and the input cradle, the resulting transmission ratio having the value K = 1/2.

8. Stabilisation device according to any one of Claims 1 to 5, characterised in that the orientable member is movable in rotation with respect to the support, under the control of a second inclination motor (34, 33), about a second inclination axis (W-W, U-U) orthogonal to the first inclination axis, a second gyroscope unit (3A, 3B) being associated with this second inclination axis and carried by the orientable member (30) so as to have its input shaft orthogonal to the first input shaft and equipped with a second aiming motor (12A, 12B), the casing of which is fixed to a second cradle (1'A, 1'B) controlled in rotation with respect to the support, parallel to the second inclination axis, by means of a second transmission linkage (1'A-30, 1'B-35-36-30) determining a second constant ratio K different from the first constant ratio, this second module including a second precession detector (11A, 11B) connected to the second inclination motor (34, 33) through a second automatic control circuit (20A, 20B).

9. Stabilisation device according to Claim 8, characterised in that, the orientable member being a reflector (30) associated with on-board equipment on the support (32) and having an axis (V-V) fixed relative to the latter, this reflector being mounted so as to pivot about a transverse axis (U-U) forming the second inclination axis under the control of the second inclination motor (33), on a fork (31) mounted so as to pivot on the support, about an axis (W-W) parallel to the axis of the equipment and forming the first inclination axis, under the control of the first inclination motor (34), the first cradle (1'A) is fixed to the reflector, determining a transmission ratio K equal to 1, whilst the second cradle (1'B) is fixed to a gear wheel (36) meshing with a second gear wheel (35) with an equal number of teeth and fixed to the fork determining a transmission ratio K equal to 1/2.

10. Stabilisation device according to Claim 9, characterised in that the input shaft of the first gyroscope unit is approximately parallel to the first inclination axis (W-W) whilst the input shaft of the second gyroscope unit is parallel to the second inclination axis (U-U).

11. On-board telescope mirror fitted with a stabilisation device according to any one of Claims 8 to 10.

## Patentansprüche

1. Vorrichtung zur Stabilisierung eines drehbeweglichen schwenkbaren Elements (1, 30) in der Neigung bezüglich eines äußeren Bezugsystems in mindestens einer ersten Neigungsachse (X'-X', U-U, W-W) unter der Steuerung durch einen ersten für diese Achse spezifischen Neigungsmotor (4, 33, 34) bezüglich eines Trägers (2, 31, 32), der seinerseits bezüglich dieses äußeren Bezugssystems beweglich ist, wobei diese Vorrichtung ein erstes gyroskopisches Modul (3, 3B, 3A) besitzt, das eine erste Eingangswelle (X-X) und eine Kreiselachse (Z-Z) besitzt, die zu einer Präzessionsachse (Y-Y) senkrecht ist, die ihrerseits zur Eingangswelle senkrecht ist, die einen Winkel von nicht Null mit dieser Neigungsachse bildet, wobei die Eingangswelle axial und seitlich bezüglich des richtbaren Elements (1, 30) gehalten ist und um sich selbst durch einen ersten Richtmotor (12, 12B, 12A) in Drehung versetzt ist, der Richtsignale erhält und dessen Gehäuse mit einer ersten Wiege (1', 1'B, 1'A) fest verbunden ist, und das erste gyroskopische Modul außerdem einen ersten Präzessionsfühler (11, 11B, 11A) umfaßt, der mit dem Neigungsmotor (4, 33, 34) über einen ersten Regelkreis (20, 20B, 20A) verbunden ist, der zu jedem Zeitpunkt an den Neigungsmotor (4, 33, 34) ein Steuersignal zum Ausgleich einer von diesem Fühler festgestellten momentanen Präzession anlegen kann,
dadurch gekennzeichnet, daß das erste gyroskopische Modul für die Neigungsachse spezifisch ist und mindestens indirekt von dem schwenkbaren Element getragen ist, daß die Wiege dieses spezifischen Moduls ihrerseits bezüglich des Trägers (2, 31, 32) parallel zur Eingangsachse gemäß einer Transmissionsverbindung (1'-1, 35-36, 1'A-30) in Drehung versetzt wird, die ein konstantes Verhältnis K zwischen den Drehungen des schwenkbaren Elements (1, 30) und der Wiege bezüglich dieses Trägers festlegt, daß der Richtmotor dieses spezifischen Moduls und der für die Neigungsachse spezifische Neigungsmotor zwei verschiedene Motoren sind und daß die erste Eingangswelle mit der Neigungsachse einen Winkel von weniger als 90° bildet.

2. Stabilisierungsvorrichtung nach Anspruch 1, dadurch gekennzeichnet, daß das erste gyroskopische Modul (3, 3A, 3B) außerdem in der Präzessionsachse mit einem Drehmomentmotor (10, 10A, 10B) versehen ist, der Ausrichtungssignale erhält.

3. Stabilisierungsvorrichtung nach Anspruch 1 oder Anspruch 2, dadurch gekennzeichnet, daß die Eingangswelle (X-X) zur Neigungsachse (X'-X', U-U, W-W) annähernd parallel ist, und zwar mit einer Abweichung von weniger als 15°.

4. Stabilisierungsvorrichtung nach einem der Ansprüche 1 bis 3, dadurch gekennzeichnet, daß die Kreiselachse (Z-Z) zur Neigungsachse (X'-X', U-U, W-W) im wesentlichen senkrecht ist.

5. Stabilisierungsvorrichtung nach einem der Ansprüche 1 bis 4, dadurch gekennzeichnet, daß dem Richtmotor (12, 12A, 12B) ein Winkelkodierer (13, 13A, 13B) zugeordnet ist.

6. Stabilisierungsvorrichtung nach einem der Ansprüche 1 bis 5, dadurch gekennzeichnet, daß das Gehäuse des Richtmotors (12, 12A) mit dem schwenkbaren Element (1, 30) fest verbunden ist, wobei das Transmissionsverhältnis K = 1 beträgt.

7. Stabilisierungsvorrichtung nach einem der Ansprüche 1 bis 5 für die Stabilisierung eines verschwenkbaren Spiegels, dadurch gekennzeichnet, daß die Transmissionsverbindung der Wiege (1'B) des ersten gyroskopischen Moduls (3B) mit dem Spiegel (30) aus einem Paar Zahnräder (35, 36) besteht, die miteinander kämmen, gleiche Zahnzahlen besitzen und von dem Träger bzw. der Eingangswiege getragen sind, wobei das sich das ergebende Transmissionsverhältnis K = 1/2 beträgt.

8. Stabilisierungsvorrichtung nach einem der Ansprüche 1 bis 5, dadurch gekennzeichnet, daß das verschwenkbare Element bezüglich des Trägers unter der Steuerung durch einen zweiten Neigungsmotor (34, 33) in einer zweiten, zur ersten Neigungsachse rechtwinkligen Neigungsachse (W-W, U-U) drehbeweglich ist, wobei dieser zweiten Neigungsachse ein zweites gyroskopisches Modul (3A, 3B) zugeordnet ist, das von dem verschwenkbaren Element (30) getragen ist, so daß seine Eingangswelle zur ersten Eingangswelle rechtwinklig ist und mit einem zweiten Richtmotor (12A, 12B) ausgerüstet ist, dessen Gehäuse mit einer zweiten Wiege (1'A, 1'B) fest verbunden ist, die bezüglich des Trägers parallel zur zweiten Neigungsachse gemäß einer zweiten Transmissionsverbindung (1'A-30, 1'B-35-36-30) in Drehung versetzt ist, die ein zweites vom ersten konstanten Verhältnis verschiedenes konstantes Verhältnis K bestimmt, wobei dieses zweite Modul einen zweiten Präzessionsfühler (11A, 11B) besitzt, der an den zweiten Neigungsmotor (34, 33) über einen zweiten Regelkreis (20A, 20B) angeschlossen ist.

9. Stabilisierungsvorrichtung nach Anspruch 8, dadurch gekennzeichnet, daß, wenn das verschwenkbare Element ein Reflektor (30) ist, der einer auf dem Träger (32) befindlichen Bordeinrichtung zugeordnet ist und eine bezüglich diesem feststehende Achse (V-V) besitzt, dieser Reflektor unter der Steuerung durch einen zweiten Neigungsmotor (33) um eine die zweite Neigungsachse bildende Querachse (U-U) auf einer Gabel (31) drehbar montiert ist, die auf dem Träger um eine zur Achse der Ausrüstung parallele und die erste Neigungsachse bildende Achse (W-W) unter der Steuerung durch den ersten Neigungsmotor (34) drehbar montiert ist, wobei die erste Wiege (1'A) mit dem Reflektor fest verbunden ist, was ein Transmissionsverhältnis K von gleich 1 festlegt, während die zweite Wiege (1'B) mit einem Zahnrad (36) fest verbunden ist, das mit einem zweiten Zahnrad (35) kämmt, das die gleiche Zahnzahl hat und mit der Gabel fest verbunden ist, was ein Transmissionsverhältnis K von gleich 1/2 festlegt.

10. Stabilisierungsvorrichtung nach Anspruch 9, dadurch gekennzeichnet, daß die Eingangswelle des ersten gyroskopischen Moduls annähernd parallel zur ersten Neigungsachse (W-W) ist, während die Eingangswelle des zweiten gyroskopischen Moduls zur zweiten Neigungsachse (U-U) parallel ist.

11. Bordteleskopspiegel, der mit einer Stabilisierungsvorrichtung nach einem der Ansprüche 8 bis 10 ausgerüstet ist.
